(19) Europäisches Patentamt
European Patent Office
Office européen des brevets

(11) **EP 3 989 104 A1**

(12) **EUROPEAN PATENT APPLICATION**
published in accordance with Art. 153(4) EPC

(43) Date of publication:
**27.04.2022  Bulletin 2022/17**

(21) Application number: **19919545.4**

(22) Date of filing: **29.11.2019**

(51) International Patent Classification (IPC):
**G06K 9/00** (2022.01)

(86) International application number:
**PCT/CN2019/122165**

(87) International publication number:
**WO 2020/253127 (24.12.2020 Gazette 2020/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.06.2019  CN 201910542712**
**05.07.2019  CN 201910606508**

(71) Applicant: **One Connect Smart Technology Co., Ltd. (Shenzhen)**
**Shenzhen, Guangdong 518000 (CN)**

(72) Inventors:
• **YAO, Xufeng**
  **Shenzhen, Guangdong 51800 (CN)**
• **XU, Guoqiang**
  **Shenzhen, Guangdong 51800 (CN)**

(74) Representative: **Bals & Vogel Patentanwälte PartGmbB**
**Konrad-Zuse-Str. 4**
**44801 Bochum (DE)**

(54) **FACIAL FEATURE EXTRACTION MODEL TRAINING METHOD AND APPARATUS, FACIAL FEATURE EXTRACTION METHOD AND APPARATUS, DEVICE, AND STORAGE MEDIUM**

(57)   A method and an apparatus for training facial feature extraction model, a method and an apparatus for extracting facial features, a device, and a storage medium are provided. The training method includes: inputting face training data into a plurality of original student networks for model training; inputting face verification data into the original student networks; inputting the verified facial feature data into a preset teacher network, respectively; and screening the candidate facial feature data and determining a candidate student network.

```
                                                           ┌─ S210
┌────────────────────────────────────────────────┐
│ inputting face training data into a plurality of │
│ original student networks for model training,    │
│ respectively, to obtain candidate student        │
│ networks corresponding to the original student   │
│ networks                                         │
└────────────────────────────────────────────────┘
                                                           ┌─ S220
┌────────────────────────────────────────────────┐
│ inputting face verification data into the        │
│ candidate student networks, respectively, to     │
│ output verified facial feature data              │
│ corresponding to the respective candidate        │
│ student networks                                 │
└────────────────────────────────────────────────┘
                                                           ┌─ S230
┌────────────────────────────────────────────────┐
│ inputting the verified facial feature data into  │
│ a preset teacher network to output candidate     │
│ facial feature data corresponding to the         │
│ respective verified facial feature data          │
└────────────────────────────────────────────────┘
                                                           ┌─ S240
┌────────────────────────────────────────────────┐
│ screening the candidate facial feature data      │
│ based on preset feature screening rules to       │
│ obtain target sample features, and determining    │
│ the candidate student network corresponding to   │
│ the target sample features as a facial feature   │
│ extraction model                                 │
└────────────────────────────────────────────────┘
```

FIG. 5

EP 3 989 104 A1

**Description**

The present application claims priority to Chinese Patent Application No. 201910606508.9, filed with the Chinese Patent Office on July 5, 2019 and entitled "METHOD AND APPARATUS FOR TRAINING FACIAL FEATURE EXTRACTION MODEL, METHOD AND APPARATUS FOR EXTRACTING FACIAL FEATURES, DEVICE, AND STORAGE MEDIUM ", the entire content of which is incorporated herein by reference.

TECHNICAL FIELD

The present application relates to the technical field of biological recognition, and more particularly to a method and an apparatus for training facial feature extraction model, a method and an apparatus for extracting facial features, a device, and a storage medium.

BACKGROUND

In recent years, biometric detection and recognition represented by human faces have been widely applied in various fields, such as identity recognition and wisdom education. Face recognition technology is a technique that is utilized to extract facial features by a feature extraction model, and perform identity recognition or target detection based on the facial features. When being utilized for extracting human facial features, the existing feature extraction model has poor extraction accuracy, which cannot be satisfy the use requirements of actual application scenarios.

SUMMARY

The present application provides a method and an apparatus for training facial feature extraction model, a method and an apparatus for extracting facial features, a device, and a storage medium, so as to improve the feature extraction accuracy of the facial feature extraction model and to provide an important reference for the facial motion recognition.

According to a first aspect, the present application provides a method for training a facial feature extraction model. The method comprises:

inputting face training data into a plurality of original student networks for model training, respectively, to obtain candidate student networks corresponding to the original student networks;

inputting face verification data into the candidate student networks, respectively, to output verified facial feature data corresponding to the respective candidate student networks;

inputting the verified facial feature data into a preset teacher network to output candidate facial feature data corresponding to the respective verified facial feature data; and

screening the candidate facial feature data based on preset feature screening rules to obtain target sample features, and determining the candidate student network corresponding to the target sample features as a facial feature extraction model.

According to a second aspect, the present application further provides a method for extracting facial features. The method comprises:

acquiring a target image;

performing image processing on the target image to obtain a target processed image;

inputting the target processed image into a facial feature extraction model to output target facial features; where the facial feature extraction model is a model trained according to the above-described method for training a facial feature extraction model.

According to a third aspect, the present application further provides an apparatus for training a facial feature extraction model, comprising:

a model training unit, configured for inputting face training data into a plurality of original student networks for model training, respectively, to obtain candidate student networks corresponding to the original student networks;

a data output unit, configured for inputting face verification data into the candidate student networks, respectively, to output verified facial feature data corresponding to the respective candidate student networks;

a data input unit, configured for inputting the verified facial feature data into a preset teacher network to output candidate facial feature data corresponding to the respective verified facial feature data; and

a model determination unit, configured for screening the candidate facial feature data based on preset feature screening rules to obtain target sample features and determining the candidate student network corresponding to the target sample features as a facial feature extraction model.

According to a fourth aspect, the present application further provides an apparatus for extracting facial features, comprising:

an image acquisition unit, configured for acquiring a target image;
an image processing unit, configured for performing image processing on the target image to obtain a target processed image; and
an image input unit, configured for inputting the target processed image into a facial feature extraction model to output target facial features; where the facial feature extraction model is a model trained according to the above-described method for training a facial feature extraction model.

According to a fifth embodiment, the present application further provides a computer device. The computer device comprises a memory and a processor. The memory is configured for storing a computer program. The processor is configured for executing the computer program and implementing the above-described method for training a facial feature extraction model or the above-described method for extracting facial features when executing the computer program.

According to sixth embodiment, the present application further provides a computer-readable storage medium. The computer-readable storage medium stores with a computer program. When the computer program is executed by the processor, the processor is enabled to implement the above-described method for training a facial feature extraction model or the above-described method for extracting facial features when executing the computer program.

The present application provides a method and an apparatus for training facial feature extraction model, a method and an apparatus for extracting facial features, a device, and a storage medium, in which, face training data are input into a plurality of original student networks for model training, respectively, to obtain candidate student networks corresponding to the original student networks; face verification data are input into the candidate student networks, respectively, to output verified facial feature data corresponding to the respective candidate student networks; the verified facial feature data are input into a preset teacher network to output candidate facial feature data corresponding to the respective verified facial feature data; and the candidate facial feature data are screened based on preset feature screening rules to obtain target sample features, and a candidate student network corresponding to the target sample features is determined as a facial feature extraction model. Therefore, the feature extraction accuracy of the facial feature extraction model is improved.

BRIEF DESCRIPTION OF THE DRAWINGS

In order to more clearly describe the technical solutions of the embodiments of the present application, the drawings used for the description of the embodiments are briefly introduced hereinbelow. Obviously, the drawings in the following description are some embodiments of the present application, for those skilled in the art, other drawings may be obtained according to the current drawings without creative work.

FIG. 1 is a schematic flowchart of a method for annotating an image set provided by an embodiment of the present application;
FIG. 2 is a schematic flowchart of sub-steps in the method for annotating an image set of FIG. 1;
FIG. 3 is a schematic flowchart of sub-steps in the method for annotating an image set of FIG. 1;
FIG. 4 is a schematic flowchart of steps for acquiring a first screened image set of FIG. 1;
FIG. 5 is a schematic flowchart of a method for training a facial feature extraction model provided by an embodiment of the present application;
FIG. 6 is a schematic flowchart of sub-steps of the method for training a facial feature extraction model of FIG. 5;
FIG. 7 is a schematic flowchart of sub-steps of the method for training a facial feature extraction model of FIG. 5;
FIG. 8 is a schematic flow chart of steps for determining a loss value;
FIG. 9 is a schematic flowchart of steps of a method for extracting facial features provided by an embodiment of the present application;
FIG. 10 is a schematic diagram of an application scenario for a method for extracting facial features provided by an embodiment of the present application;
FIG. 11 is a schematic block diagram of an apparatus for training a facial feature extraction model provided by an embodiment of the present application;
FIG. 12 is a schematic block diagram of a subunit of the apparatus for training a facial feature extraction model of FIG. 11;
FIG. 13 is a schematic block diagram of an apparatus for extracting facial features according to an embodiment of the present application; and
FIG. 14 is a schematic block diagram of a structure of a computer device according to an embodiment of the application.

DETAILED DESCRIPTION OF THE EMBODIMENTS

Technical solutions in the embodiments of the present application will be clearly and completely described in combination with the accompanying drawings in the embodiments of the present application hereinbelow. Obviously, the described embodiments are only part of the embodiments, rather than all of the embodiments, of the present application. Based on the embodiments in the present application, all other embodiments obtained by those skilled in the art without creative work shall fall within the protection scope of the present application.

The flowchart shown in the drawings is only exemplary description, and does not necessarily include all contents and operations/steps, nor does it have to be executed in the described order. For example, some operations/steps can also be divided, combined, or partially combined, so the actual execution order may be changed according to actual conditions.

The embodiments of the present application provide a method and an apparatus for training facial feature extraction model, a method and an apparatus for extracting facial features, a device, and a storage medium. The facial feature extraction model may be configured to perform facial feature extraction on the face motion in a face motion recognition scenario.

Some embodiments of the present application are described in detail in combination with the drawings. On the premise of no conflict, the following embodiments and features in the embodimetns may be combined with each other.

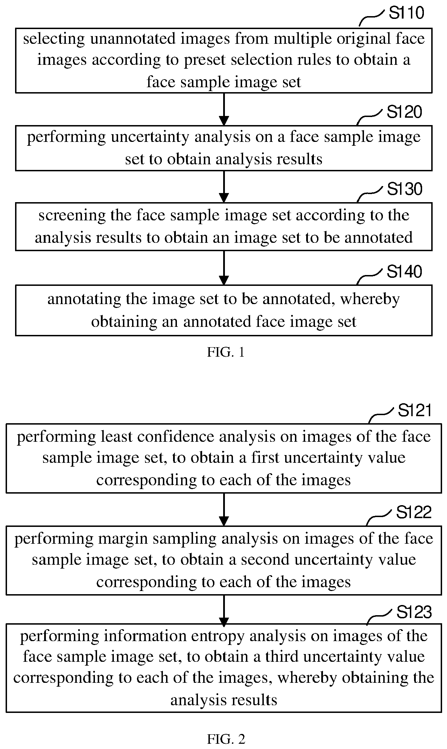

Referring to FIG. 1, which is a schematic flowchart of a method for annotating an image set provided by an embodiment of the present application.

In the machine learning process, it is necessary to annotate the face sample images in order to test and train a model. Generally, the face sample images are directly annotated to obtain the corresponding face training data. However, since there are situations where the face sample images can be easily recognized by the current model, the training of such annotated images not only fails to achieve the desired effect, but also wastes a lot of manpower for the annotation, which decreases the overall efficiency of the machine learning.

As shown in FIG. 1, in order to improve the efficiency of the model training and the overall efficiency of the machine learning, the present application provides a method for annotating an image set, which is used to annotate face images, so as to perform model training of a facial feature extraction model. The method specifically includes: step S110 to step S150.

S110. selecting unannotated images from multiple original face images according to preset selection rules to obtain a face sample image set.

Specifically, the original face image refers to a large number of images obtained from the Internet. These images are unprocessed images. Machine learning can recognize these images and obtain recognition results, or select corresponding images for testing and training so as to obtain data that is more suitable for machine learning, such that the machine learning is performed according to preset goals to obtain a better machine leaning model.

Therefore, it is necessary to select unannotated face sample images from a large number of original face images, all face sample images constitute a face sample image set. Selection rules are preset, and images may be select from a specific image generation source as face sample images, for example, face images are selected from a preset channel, for example, Yale face database, as the face sample images. It can be understood that the images may also be selected according to the generation time thereof, for example, face images during a legal holiday are selected as the face sample images. A set of the face sample images constitute as a face sample image set.

S120, performing uncertainty analysis on a face sample image set to obtain analysis results.

The face sample image set comprises a plurality of unannotated images. The step of performing uncertainty analysis on the face sample image set to obtain analysis results specifically comprises:
performing at least one analysis of least confidence analysis, margin sampling analysis, and information entropy analysis on the images of the face sample image set, to obtain uncertainty value of each image of the face sample image set.

Specifically, the uncertainty can be measured through at least one of least confidence, margin sampling, and information entropy. Specifically, the analysis results may be embodied in the numerical form. For example, the higher the value is, the higher the uncertainty is. It can be understood that the analysis results may also be presented in the form of dividing the uncertainty into multiple levels for comparisons to show the uncertainty.

As shown in FIG. 2, in an embodiment, the specific process of performing uncertainty analysis on a face sample image set, that is, step S120, specifically comprises sub-steps S121, S122, and S123.

S121, performing least confidence analysis on images of the face sample image set, to obtain a first uncertainty value corresponding to each of the images.

Specifically, the uncertainty of the image is also called image annotation value. The least confidence analysis may be defined as follows:

$$x^*_{LC} = \arg\max_x 1 - P_\theta(\hat{y} \mid x)$$

where $x^*_{LC}$ represents the first uncertainty value, $\hat{y}$ represents a category, $P_\theta(\hat{y}|x)$ represents a probability in a predicted probability distribution of a sample x, $P_\theta$ represents a predicted probability distribution of a model, the greater $x^*_{LC}$ is, the higher the uncertainty of sample x is, indicating the stronger necessity for the corresponding annotation processing.

S122, performing margin sampling analysis on images of the face sample image set, to obtain a second uncertainty value corresponding to each of the images.

Specifically, the margin sampling analysis may be defined as follows:

$$x^*_M = \arg\min_x [P_\theta(\hat{y}_1 \mid x) - P_\theta(\hat{y}_2 \mid x)]$$

where $x^*_M$ represents the second uncertainty value, $P_\theta(\hat{y}_1|x)$ represents a highest probability in the predicted probability distribution of the sample x, $P_\theta(\hat{y}_2|x)$ represents a second highest probability in the predicted probability distribution of the sample x, in which, $\hat{y}_1$ and $\hat{y}_2$ respectively represent categories corresponding to the highest probability and the second highest probability predicted by the model $\theta$, $P_\theta$ represents a predicted probability distribution of a model, the greater $x^*_M$ is, the higher the uncertainty of the sample x is, indicating the stronger necessity for the corresponding annotation processing.

S123, performing information entropy analysis on images of the face sample image set, to obtain a third uncertainty value corresponding to each of the images, whereby obtaining the analysis results.

Specifically, the information entrophy may be defined as follows:

$$x^*_H = \arg\max_x - \sum_i P_\theta(y_i \mid x) \log P_\theta(y_i \mid x)$$

where $x^*_H$ represents the third uncertainty value, $P_\theta(y_i|x)$ represents a predicted probability of the sample x, $P_\theta$ represents a predicted probability distribution of a model, the greater $x^*_H$ is, the higher the uncertainty of the sample x is, indicating the stronger necessity for the corresponding annotation processing.

S130, screening the face sample image set according to the analysis results to obtain an image set to be annotated.

Specifically, the analysis result comprises uncertainty values corresponding to each image of the face sample image set.

In an embodiment, step S130 specifically comprises:

screening the face sample image set according to the first uncertainty value, the second uncertainty value, and the third uncertainty value to obtain the image set to be annotated.

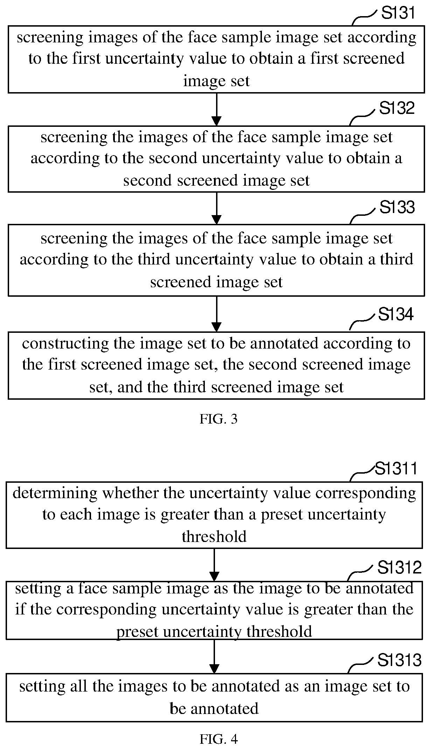

As shown in FIG. 3, the step of screening the face sample image set according to the analysis results to obtain an image set to be annotated, that is, step S130, specifically comprises sub-steps S131 and S134.

S131, screening images of the face sample image set according to the first uncertainty value to obtain a first screened image set.

Specifically, based on the least confidence analysis, the first uncertainty value corresponding to such analysis method can be obtained. The images of the face sample image set are screened according to the first uncertainty value to obtain the corresponding first screened image set.

S132, screening the images of the face sample image set according to the second uncertainty value to obtain a second screened image set.

Specifically, based on the margin sampling analysis, the second uncertainty value corresponding to such analysis method can be obtained. The images of the face sample image set are screened according to the second uncertainty value to obtain the corresponding second screened image set.

S133, screening the images of the face sample image set according to the third uncertainty value to obtain a third screened image set.

Specifically, based on the information entropy analysis, the third uncertainty value corresponding to such analysis method can be obtained. The images of the face sample image set are screened according to the third uncertainty value to obtain the corresponding third screened image set.

S134, constructing the image set to be annotated according to the first screened image set, the second screened image set, and the third screened image set.

Specifically, the first screened image set, the second screened image set, and the third screened image set construct the image set to be annotated. In this way, the number of the images in the image set to be annotated is increased, and in the meanwhile, the image diversity of the image set to be annotated is increased, which finally enriches the images of the image set to be annotated, increases the training efficiency of the model, effectively reduces the training time, and makes the model robuster.

Taken the uncertainty value being the first uncertainty value as an example, in an embodiment, the step of screening images of the face sample image set according to the first uncertainty value to obtain a first screened image set, that is, step S131, comprises:

sorting the images of the face sample image set in a descending order according to the corresponding uncertainty values, setting a preset number of the images at the beginning of the sequence as the images to be annotated, and constructing the image set to be annotated based on all the images to be annotated.

Specifically, by sorting the images of the face sample image set in the descending order according to the corresponding uncertainty values, it can be ensured that images at a front of the image sequence are those images with high uncertainty, and the subsequent selection can therefore keep the uncertainty degree of the selected data, thereby ensuring the relatively high image training efficiency of the training model.

The preset number can be correspondingly selected according to the application environment, or the preset number can be set according to a certain ratio. For example, 85% of the total image number of the face sample image set can be selected as the images to be annotated, in such condition, the preset number is 85% of the total number.

In another embodiment, as shown in FIG. 4, the step of screening images of the face sample image set according to the first uncertainty value to obtain a first screened image set, that is, step S131, specifically comprises: sub-steps S1311, S1312, and S1313.

S1311, determining whether the uncertainty value corresponding to each image is greater than a preset uncertainty threshold.

Specifically, the uncertainty value is set according to the actual working environment.

S1312. setting a face sample image as the image to be annotated if the corresponding uncertainty value is greater than the preset uncertainty threshold;

If the uncertainty value of an image in the face sample image set is greater than the uncertainty threshold, it indicates that the image conforms to the annotation rules, and such image is subsequently annotated.

S1313. setting all the images to be annotated as an image set to be annotated.

It can be understood that when the uncertainty value is the second uncertainty value or the third uncertainty value, the above steps can be referred to, which will not be repeated here.

S140, annotating the image set to be annotated, whereby obtaining an annotated face image set.

Annotation processing is to form one-to-one correspondence between each of the images to be annotated and their corresponding categories, so as to obtain the corresponding annotated images. The annotated images are face verification data.

In an embodiment, the step of annotating the images to be annotated, that is, step S140, may comprise: receiving an annotation information that corresponds to the images to be annotated and that is arbitrarily input by annotation; forming a correspondence relationship between the annotation information and the images to be annotated according to review results to obtain an annotated face image set; in which, the review results are obtained by review processing of the annotation information by the reviewer.

In the above-mentioned image annotation method, the face sample image set is respectively performed with the lease confidence analysis, margin sampling analysis, and information entropy analysis to obtain the respective uncertainty results. The three type of uncertainty results are merged, such that the uncertainty of the images can be analyzed from different angles, in this way, the number of the images to be annotated is increased, and at the same time the diversity of the images to be annotated is enhanced. The annotation of each of the images to be annotated can improve the model training efficiency, achieve better effect with less data, and improve the overall efficiency of the machine learning.

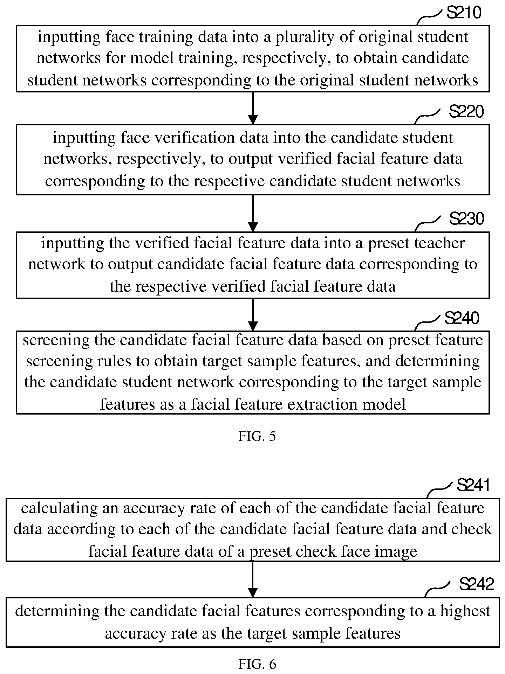

Referring to FIG. 5, which is a schematic flowchart of steps of a method for training a facial feature extraction model provided by an embodiment of the present application.

It should be noted that the training method can select multiple original student networks for model training to obtain corresponding candidate student networks. The "multiple" may be two, three, or more. The original student networks can be YOLO9000, AlexNet, or VGGNet, etc. Hereinbelow, taken the "multiple" being interpreted as "two" and the two original student networks being YOLO9000 network and VGGNet network as an example.

As shown in FIG. 1, the method for training a facial feature extraction model specifically includes: step S210 to step S240.

S210, inputting face training data into a plurality of original student networks for model training, respectively, to obtain candidate student networks corresponding to the original student networks.

Specifically, the face training data are used to perform model training on the original student network, which includes training sub-data and testing sub-data. Among them, the testing sub-data are the data obtained by annotating using the above image annotation method, and are configured to test the candidate student networks in order to determine whether the candidate student networks satisfy the leaning requirement. In particular, the face training data are input into the YOLO9000 network for model training, thereby obtaining a first candidate student network. The face training data are input to the VGGNet network for model training, thereby obtaining a second candidate student network.

S220, inputting face verification data into the candidate student networks, respectively, to output verified facial feature data corresponding to the respective candidate student networks.

Specifically, the face verification data may also be data that are obtain by using the above image annotation method. The face verification data are input into the first candidate student network to obtain the first verified facial feature data. The face verification data is input into the second candidate student network to obtain the second verified facial feature data.

S230, inputting the verified facial feature data into a preset teacher network to output candidate facial feature data corresponding to the respective verified facial feature data.

Among them, the teacher network can be pre-trained YOLO9000. Specifically, the first verified facial feature data are input to the teacher network to output first candidate facial feature data. The second verified facial feature data are input to the teacher network to output second candidate facial feature data.

S240, screening the candidate facial feature data based on preset feature screening rules to obtain target sample features, and determining the candidate student network corresponding to the target sample features as a facial feature extraction model.

Specifically, the preset feature screening rules can be set according to specific application scenarios. In one embodiment, as shown in FIG. 6, screening multiple candidate facial feature data based on preset feature screening rules to obtain target sample features includes sub-steps S241 and S242.

S241, calculating an accuracy rate of each of the candidate facial feature data according to each of the candidate facial feature data and check facial feature data of a preset check face image.

Specifically, the check face image can be set according to a specific scene. A first accuracy rate is calculated according to the first candidate facial feature data. A second accuracy rate is calculated according to the second candidate facial feature data, the.

More specifically, the first candidate facial feature data and the check facial feature data of the preset check face image are input into a pre-trained neural network model to output the first accuracy rate corresponding to the first candidate facial feature data. The second candidate facial feature data and the check facial feature data of the preset check face image are input into the neural network model to output the second accuracy rate corresponding to the second candidate facial feature data. The neutral network model may specifically be a pre-trained GoogLeNet model, and it may also be other network models.

S242, determining the candidate facial features corresponding to a highest accuracy rate as the target sample features.

For example, if the first accuracy rate is smaller than the second accuracy rate, the second candidate facial feature data corresponding to the second accuracy rate are determined as the target sample features. The second candidate student network corresponding to the second candidate facial feature data is determined as the facial feature extraction model.

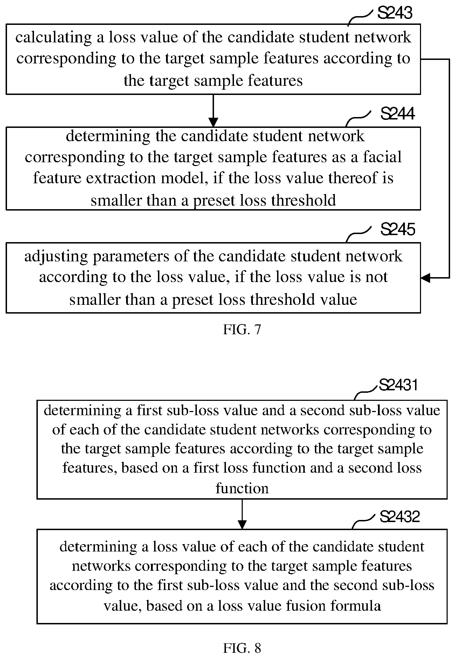

As shown in FIG. 7, in an embodiment, the step of determining the candidate student network corresponding to the target sample features as a facial feature extraction model comprises: S243, S244, and S245.

S243, calculating a loss value of the candidate student network corresponding to the target sample features according to the target sample features.

The specific process of calculating a loss value of the candidate student network corresponding to the target sample features according to the target sample features is as shown in FIG. 8, that is, step S243 comprises S2431 and S2432.

S2431, determining a first sub-loss value and a second sub-loss value of each of the candidate student networks corresponding to the target sample features according to the target sample features, based on a first loss function and a second loss function.

Specifically, based on the first loss function, the first sub-loss value of each of the candidate student network corresponding to the target sample features is determined according to the target sample features. Based on the second loss function, the second sub-loss value of the candidate student network corresponding to the target sample features is determined according to the target sample features.

The first loss function is as follows:

$$J_s = -\sum_{k=1}^{m} \log \frac{e^{u_k}}{\sum_{j=1}^{n} u_j}$$

where, $J_s$ represents the first sub-loss value, $u_k$ represents a feature vector of the target sample feature of a k-th image in the face training data, $u_j$ represents a tag vector of the k-th image in the face training data, and m represents the number of images in each bath of the face training data.

The second loss function is as follows:

$$J_c = \frac{1}{2} \sum_{k=1}^{m} \| u_k - c_k \|_2^2$$

where, $J_c$ represents the second sub-loss value, $u_k$ represents the feature vector of the target sample feature of the k-th image in the face training data, $c_k$ represents a center of the k-th image in the face training data, and m represents the number of images in each bath of the face training data.

S2432, determining a loss value of each of the candidate student networks corresponding to the target sample features according to the first sub-loss value and the second sub-loss value, based on a loss value fusion formula.

Specifically, the loss value fusion formula is as follows:

$$J = w_1 J_s + w_2 J_c$$

where $J$ represents the loss value, and $w_1$ and $w_2$ represent weights.

The first loss function and the second loss function are combined as the loss function for retraining the facial feature extraction model, in this way, the trained facial feature extraction model is cohesive. The feature data may be accurately extracted even in the absence of massive high-quality face training data set, and in the meanwhile, the slow convergence speed and over-fitting phenomenon are avoided during the retraining of facial feature extraction model.

S244, determining the candidate student network corresponding to the target sample features as a facial feature extraction model, if the loss value thereof is smaller than a preset loss threshold.

Specifically, if the loss value is smaller than the preset loss threshold, it indicates that the candidate student network corresponding to the target sample features has been converged, and the candidate student network is determined as the facial feature extraction model.

S245: adjusting parameters of the candidate student network according to the loss value, if the loss value is not smaller than a preset loss threshold value.

Specifically, if the loss value is not smaller than the preset loss threshold, it indicates that the candidate student network corresponding to the target sample features is not converged, and the candidate student network needs to continue to be trained, and the parameters of the candidate student network are adjusted according to the loss value until the loss value is smaller than the loss threshold, and the candidate student network corresponding to the target sample features is determined as the facial feature extraction model, that is, step S244 is executed.

In the above-described method for training a facial feature extraction model, the multiple original student networks are performed with model training by the face training data annotated by the above-described annotation method, and screened by using the teacher network and the face verification data, such that the candidate student network with the best feature extraction accuracy is obtained as the facial feature extraction model. The training methods enriches the diversities of the partial face training data and face verification data, improves the efficiency of model training, and improves the accuracy of facial features extraction by the model, thus providing an important reference for human facial action recognition.

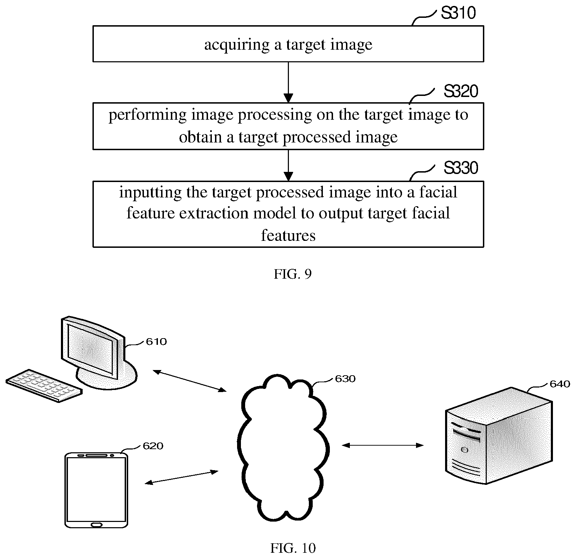

Referring to FIG. 9, which is a schematic flowchart of steps of a method for extracting facial features provided by an embodiment of the present application. Referring to FIG. 10, which is a schematic diagram of an application scenario of a method for extracting facial features provided by an embodiment of the present application. Among them, the method for extracting facial features may be applied to a system including terminal devices 610 and 620, a network 630, and a server 640.

The network 640 is used to provide a medium for communication links between the terminal devices 610 and 620 and the server 640. The network 630 may include various connection types, such as wired, wireless communication links, or fiber optic cables.

The user can use the terminal devices 610 and 620 to interact with the server 640 via the network 630 to receive or send request instructions and the like. Various communication client applications, such as image processing applications, web browser applications, search applications, instant messaging tools, etc., may be installed on the terminal devices 610 and 620.

Specifically, the method for extracting facial feature specifically includes: step S310 to step S330.

S310, acquiring a target image.

Specifically, the image to be recognized includes a face target to be recognized, which may be a visible light image, such as an image in a Red Green Blue (RGB) mode. It can be understood that the aforementioned image to be recognized may also be a near infrared (Near Infrared, NIR) image.

The execution subject of this embodiment may be installed with a camera for collecting visible light images or a camera for collecting near infrared images. The user can select the camera to be turned on, and then use the selected camera to take a picture (using a self-portrait of the user's head or face) to obtain the image to be recognized.

S320, performing image processing on the target image to obtain a target processed image.

In order to improve the accuracy of the facial feature extraction model, after acquiring the target image, it is necessary to perform image processing operations on the target image to change the image parameters of the target image.

Among them, the image processing operations include: size adjustment, cropping processing, rotation processing, and image algorithm processing, etc. The image algorithm processing includes: color temperature adjustment algorithm, exposure adjustment algorithm, etc. These image processing operations may make the target image closer to the real picture.

Correspondingly, picture parameters include: the size information, the pixel size, the contrast, the sharpness, and the natural saturation.

S330, inputting the target processed image into a facial feature extraction model to output target facial features.

The facial feature extraction model is a model trained according to the method for training a facial feature extraction model as described in the above.

In the above-described method for extracting facial features, a target image is acquired, image processing is performed on the target image to obtain a target processed image, and the target processed image are input into a facial feature extraction model to output target facial features. In this way, the accuracy of the facial feature extraction is high, which is convenient for the method to be applied into actual application scenarios.

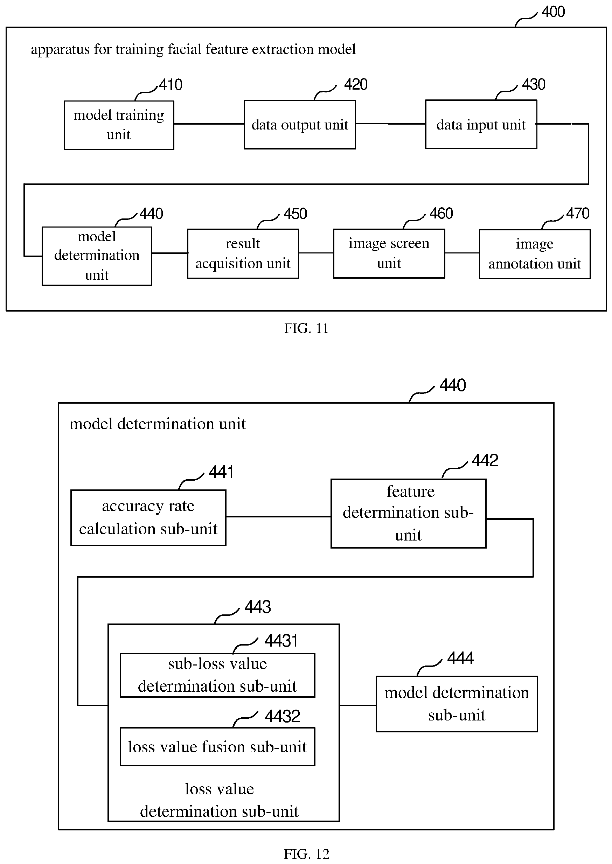

Referring to FIG. 11, which is a schematic block diagram of an apparatus for training a facial feature extraction model provided by an embodiment of the present application. The apparatus for training a facial feature extraction model is configured to execute the above-described method for training a facial feature extraction model. The apparatus for training a facial feature extraction model may be configured in a server or a terminal.

The server may be an independent server or a server cluster. The terminal may be an electronic device, such as a mobile phone, a tablet computer, a notebook computer, a desktop computer, a personal digital assistant, and a wearable device.

As shown in FIG. 11, an apparatus 400 for training a facial feature extraction model, comprises: a model training unit 410, a data output unit 420, a data input unit 430, and a model determination unit 440.

The model training unit 410 is configured for inputting face training data into a plurality of original student networks for model training, respectively, to obtain candidate student networks corresponding to the original student networks.

The data output unit 420 is configured for inputting face verification data into the candidate student networks, respectively, to output verified facial feature data corresponding to the respective candidate student networks.

The data input unit 430 is configured for inputting the verified facial feature data into a preset teacher network to output candidate facial feature data corresponding to the respective verified facial feature data.

The model determination unit 440 is configured for screening the candidate facial feature data based on preset feature screening rules to obtain target sample features and determining the candidate student network corresponding to the target sample features as a facial feature extraction model.

As shown in FIG. 11, in an embodiment, the apparatus 400 for training a facial feature extraction model further comprises: a result acquisition unit 450, an image screen unit 460, and an image annotation unit 470.

The result acquisition unit 450 is configured for performing uncertainty analysis on a face sample image set to obtain analysis results, where the face sample image set comprises a plurality of unannotated images.

The image screen unit 460 is configured for screening the face sample image set according to the analysis results to obtain an image set to be annotated.

The image annotation unit 470 is configured for annotating the image set to be annotated to obtain the face verification data.

As shown in FIG. 12, in an embodiment, the model determination unit 440 comprises: an accuracy rate calculation sub-unit 441 and a feature determination sub-unit 442.

The accuracy rate calculation sub-unit 441 is configured for calculating an accuracy rate of each of the candidate facial feature data according to each of the candidate facial feature data and check facial feature data of a preset check face image.

The feature determination sub-unit 442 is configured for determining the candidate facial features corresponding to a highest accuracy rate as the target sample features.

As shown in FIG. 12, in an embodiment, the model determination unit 440 comprises: a loss value determination sub-unit 443 and a model determination sub-unit 444.

The loss value determination sub-unit 443 is configured for determining a loss value of each of the candidate student networks corresponding to the target sample features according to the target sample features.

The model determination sub-unit 444 is configured for determining the candidate student network corresponding to the target sample features as a facial feature extraction model, if the loss value thereof is smaller than a preset loss threshold.

As shown in FIG. 12, in an embodiment, the loss value determination sub-unit 443 comprises: a sub-loss value determination sub-unit 4431 and a loss value fusion sub-unit 4432.

The sub-loss value determination sub-unit 4431 is configured for determining a first sub-loss value and a second sub-loss value of each of the candidate student networks corresponding to the target sample features according to the target sample features, based on a first loss function and a second loss function.

The loss value fusion sub-unit 4432 is configured for determining a loss value of each of the candidate student networks corresponding to the target sample features according to the first sub-loss value and the second sub-loss value, based on a loss value fusion formula.

The first loss function is as follows:

$$J_s = -\sum_{k=1}^{m} \log \frac{e^{u_k}}{\sum_{j=1}^{n} u_j}$$

where $J_s$ represents the first sub-loss value, $u_k$ represents a feature vector of the target sample feature of a k-th image in the face training data, $u_j$ represents a tag vector of the k-th image in the face training data, and m represents the number of images in each bath of the face training data;

The second loss function is as follows:

$$J_c = \frac{1}{2} \sum_{k=1}^{m} \| u_k - c_k \|_2^2$$

where $J_c$ represents the second sub-loss value, $u_k$ represents the feature vector of the target sample feature of the k-th image in the face training data, $c_k$ represents a center of the k-th image in the face training data, and m represents the number of images in each bath of the face training data;

The loss value fusion formula is as follows:

$$J = w_1 J_s + w_2 J_c$$

where $J$ represents the loss value, and $w_1$ and $w_2$ represent weights.

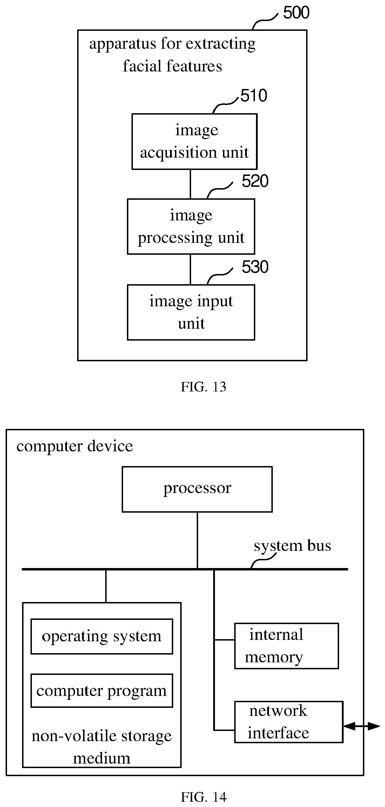

Referring to FIG. 13, which is a schematic block diagram of an apparatus for extracting facial features according to an embodiment of the present application. The apparatus for extracting facial features is configured to execute the above-described method for extracting facial feature. The apparatus for extracting facial features may be configured in a server or a terminal.

As shown in FIG. 13, the apparatus 500 for extracting facial features comprises: an image acquisition unit 510, an image processing unit 520, and an image input unit 530.

The image acquisition unit 510 is configured for acquiring a target image.

The image processing unit 520 is configured for performing image processing on the target image to obtain a target processed image.

The image input unit 530 is configured for inputting the target processed image into a facial feature extraction model to output target facial features. The facial feature extraction model is a model trained according to the above-described method for training a facial feature extraction model.

It should be noted that those skilled in the art can clearly understand that for the convenience and brevity of description, the apparatus for training a facial feature extraction model and the specific working process of each unit described in the above may refer to corresponding processes in the method for training a facial feature extraction model as described in the forgoing embodiments, thereby not being repeated herein.

The above apparatus may be implemented in the form of a computer program, which can be operated in the computer device as shown in FIG. 14.

Referring to FIG. 14, which is a schematic block diagram of a computer device according to an embodiment of the present application. The computer device may be a server or a terminal.

As shown in FIG. 14, the computer device comprises: a processor, a memory, and a network interface connected through system buses, where the memory may comprise a non-volatile storage medium and an internal memory.

The non-volatile storage medium can store an operating system and a computer program. The computer program comprises program instructions, and when the program instructions are executed, the processor is enabled to execute a method for training a facial feature extraction model.

The processor is configured to provide calculation and control capabilities and support the operation of the entire computer equipment.

The internal memory provides an environment for the operation of the computer program in the non-volatile storage medium, and when the computer program is executed by the processor, the processor is enabled to execute a method for training a facial feature extraction model.

The network interface is configured for network communication, such as sending assigned tasks. Those skilled in the art can understand that the structure shown in FIG. 14 is only a block diagram of a part of the structure that is related to the technical solution of the present application, and does not constitute a limitation on the computer device where the technical solution of the present application is applied. The specific computer device may include more or less parts than shown in the figure, or combine with some parts, or have a different part arrangement.

It should be understood that the processor may be a central processing unit (CPU), the processor may also be other general-purpose processors, digital signal processors (DSP), and application specific integrated circuits (ASIC), Field-Programmable Gate Array (FPGA), or other programmable logic devices, discrete gates, or transistor logic devices, and discrete hardware components, etc. Among them, the general-purpose processor may be a microprocessor, or the processor may also be any conventional processor.

The processor is configured to execute a computer program stored in the memory, so as to implement the following steps:

inputting face training data into a plurality of original student networks for model training, respectively, to obtain candidate student networks corresponding to the original student networks; inputting face verification data into the candidate student networks, respectively, to output verified facial feature data corresponding to the respective candidate student networks; inputting the verified facial feature data into a preset teacher network to output candidate facial feature data corresponding to the respective verified facial feature data; and screening the candidate facial feature data based on preset feature screening rules to obtain target sample features, and determining the candidate student network corresponding to the target sample features as a facial feature extraction model.

In an embodiment, before implementing the step of inputting face verification data into the candidate student networks, respectively, to output verified facial feature data corresponding to the respective candidate student networks, the processor is further configured to implement:

performing uncertainty analysis on a face sample image set to obtain analysis results, where the face sample image set comprises a plurality of unannotated images; screening the face sample image set according to the analysis results to obtain an image set to be annotated; and annotating the image set to be annotated to obtain the face verification data.

In an embodiment, when implementing the step of screening the candidate facial feature data based on preset feature screening rules to obtain target sample features, the processor is configured to implement:

calculating an accuracy rate of each of the candidate facial feature data according to each of the candidate facial feature data and check facial feature data of a preset check face image; and determining the candidate facial features corresponding to a highest accuracy rate as the target sample features.

In an embodiment, when implementing the step of determining the candidate student network corresponding to the target sample features as a facial feature extraction model, the processor is configured to implement:

calculating a loss value of the candidate student network corresponding to the target sample features according to the target sample features, and determining the candidate student network corresponding to the target sample features as a facial feature extraction model, if the loss value thereof is smaller than a preset loss threshold

In an embodiment, when implementing the step of calculating a loss value of the candidate student network corresponding to the target sample features according to the target sample features, the processor is configured to implement:
determining a first sub-loss value and a second sub-loss value of each of the candidate student networks corresponding to the target sample features according to the target sample features, based on a first loss function and a second loss function; and determining a loss value of each of the candidate student networks corresponding to the target sample features according to the first sub-loss value and the second sub-loss value, based on a loss value fusion formula.

The first loss function is as follows:

$$J_s = -\sum_{k=1}^{m} \log \frac{e^{u_k}}{\sum_{j=1}^{n} u_j}$$

where $J_s$ represents the first sub-loss value, $u_k$ represents a feature vector of the target sample feature of a k-th image in the face training data, $u_j$ represents a tag vector of the k-th image in the face training data, and m represents the number of images in each bath of the face training data.

The second loss function is as follows:

$$J_c = \frac{1}{2}\sum_{k=1}^{m} \| u_k - c_k \|_2^2$$

where $J_c$ represents the second sub-loss value, $u_k$ represents the feature vector of the target sample feature of the k-th image in the face training data, $c_k$ represents a center of the k-th image in the face training data, and m represents the number of images in each bath of the face training data.

The loss value fusion formula is as follows:

$$J = w_1 J_s + w_2 J_c$$

where $J$ represents the loss value, and $w_1$ and $w_2$ represent weights.

In another embodiment, the processor is configured to execute a computer program stored in a memory to implement the following steps:
acquiring a target image; performing image processing on the target image to obtain a target processed image; inputting the target processed image into a facial feature extraction model to output target facial features, in which, the facial feature extraction model is a model trained according to the above-described method for training a facial feature extraction model.

The embodiments of the present application also provide a computer-readable storage medium, the computer-readable storage medium stores a computer program, the computer program includes program instructions, and the processor executes the program instructions to implement the method for training a facial feature extraction model according to an embodiment of the present application.

The computer-readable storage medium may be the internal storage unit of the computer device as described in the foregoing embodiment, such as the hard disk or the memory of the computer device. The computer-readable storage medium may also be an external storage device of the computer device, such as a plug-in hard disk, a smart memory card (SMC), and a secure digital (SD) card, a flash card, etc, that are equipped on the computer device.

The above are only specific implementations of the present application, but the protection scope of the present application is not limited to this. Those skilled in the art may easily think of various equivalent modification or replacement within the technical scope disclosed in the present application, and these modifications or replacements shall be covered within the protection scope of the present application. Therefore, the protection scope of the present application should be subject to the protection scope of the claims.

**Claims**

1. A method for training a facial feature extraction model, comprising:

inputting face training data into a plurality of original student networks for model training, respectively, to obtain candidate student networks corresponding to the original student networks;

inputting face verification data into the candidate student networks, respectively, to output verified facial feature data corresponding to the respective candidate student networks;

inputting the verified facial feature data into a preset teacher network to output candidate facial feature data corresponding to the respective verified facial feature data;

screening the candidate facial feature data based on preset feature screening rules to obtain target sample features;

determining a first sub-loss value and a second sub-loss value of each of the candidate student networks corresponding to the target sample features according to the target sample features, based on a first loss function and a second loss function;

determining a loss value of each of the candidate student networks corresponding to the target sample features according to the first sub-loss value and the second sub-loss value, based on a loss value fusion formula; and

determining the candidate student network corresponding to the target sample features as a facial feature extraction model, if the loss value thereof is smaller than a preset loss threshold;

wherein the first loss function is as follows:

$$J_s = -\sum_{k=1}^{m} \log \frac{e^{u_k}}{\sum_{j=1}^{n} u_j}$$

wherein, $J_s$ represents the first sub-loss value, $u_k$ represents a feature vector of the target sample feature of a k-th image in the face training data, $u_j$ represents a tag vector of the k-th image in the face training data, and m represents the number of images in each bath of the face training data;

wherein, the second loss function is as follows:

$$J_c = \frac{1}{2}\sum_{k=1}^{m} \| u_k - c_k \|_2^2$$

wherein, $J_c$ represents the second sub-loss value, $u_k$ represents the feature vector of the target sample feature of the k-th image in the face training data, $c_k$ represents a center of the k-th image in the face training data, and m represents the number of images in each bath of the face training data;

wherein, the loss value fusion formula is as follows:

$$J = w_1 J_s + w_2 J_c$$

wherein, $J$ represents the loss value, and $w_1$ and $w_2$ represent weights.

2. The method for training a facial feature extraction model according to claim 1, wherein before the step of inputting face verification data into the candidate student networks, respectively, to output verified facial feature data corresponding to the respective candidate student networks, the method further comprises:

performing uncertainty analysis on a face sample image set to obtain analysis results, wherein the face sample image set comprises a plurality of unannotated images;

screening the face sample image set according to the analysis results to obtain an image set to be annotated; and annotating the image set to be annotated to obtain the face verification data.

3. The method for training a facial feature extraction model according to claim 2, wherein the step of performing uncertainty analysis on a face sample image set to obtain analysis results, wherein the face sample image set comprises a plurality of unannotated images, comprises:

performing least confidence analysis on images of the face sample image set, to obtain a first uncertainty value corresponding to each of the images;

performing margin sampling analysis on images of the face sample image set, to obtain a second uncertainty value corresponding to each of the images; and

performing information entropy analysis on images of the face sample image set, to obtain a third uncertainty value corresponding to each of the images, whereby obtaining the analysis results.

4. The method for training a facial feature extraction model according to claim 2, wherein

the analysis results comprises: the first uncertainty value, the second uncertainty value, and the third uncertainty value; and
the step of screening the face sample image set according to the analysis results to obtain an image set to be annotated comprises:

screening images of the face sample image set according to the first uncertainty value to obtain a first screened image set;
screening the images of the face sample image set according to the second uncertainty value to obtain a second screened image set;
screening the images of the face sample image set according to the third uncertainty value to obtain a third screened image set; and
constructing the image set to be annotated according to the first screened image set, the second screened image set, and the third screened image set.

5. The method for training a facial feature extraction model according to claim 1, wherein the step of screening the candidate facial feature data based on preset feature screening rules to obtain target sample features comprises:

calculating an accuracy rate of each of the candidate facial feature data according to each of the candidate facial feature data and check facial feature data of a preset check face image; and
determining the candidate facial features corresponding to a highest accuracy rate as the target sample features.

6. A method for extracting facial features, comprising:

acquiring a target image;
performing image processing on the target image to obtain a target processed image; and
inputting the target processed image into a facial feature extraction model to output target facial features;

wherein the facial feature extraction model is a model trained according to the method for training a facial feature extraction model according to any of claims 1-5.

7. An apparatus for training a facial feature extraction model, comprising:

a model training unit, configured for inputting face training data into a plurality of original student networks for model training, respectively, to obtain candidate student networks corresponding to the original student networks;
a data output unit, configured for inputting face verification data into the candidate student networks, respectively, to output verified facial feature data corresponding to the respective candidate student networks;
a data input unit, configured for inputting the verified facial feature data into a preset teacher network to output candidate facial feature data corresponding to the respective verified facial feature data; and
a model determination unit, configured for:

screening the candidate facial feature data based on preset feature screening rules to obtain target sample features;
determining a first sub-loss value and a second sub-loss value of each of the candidate student networks corresponding to the target sample features according to the target sample features, based on a first loss function and a second loss function;
determining a loss value of each of the candidate student networks corresponding to the target sample features according to the first sub-loss value and the second sub-loss value, based on a loss value fusion formula;
determining the candidate student network corresponding to the target sample features as a facial feature extraction model, if the loss value thereof is smaller than a preset loss threshold;

wherein the first loss function is as follows:

$$J_s = -\sum\nolimits_{k=1}^{m} \log \frac{e^{u_k}}{\sum\nolimits_{j=1}^{n} u_j}$$

wherein, $J_s$ represents the first sub-loss value, $u_k$ represents a feature vector of the target sample feature of a k-th image in the face training data, $u_j$ represents a tag vector of the k-th image in the face training data, and m represents the number of images in each bath of the face training data;

wherein, the second loss function is as follows:

$$J_c = \frac{1}{2}\sum\nolimits_{k=1}^{m} \| u_k - c_k \|_2^2$$

wherein, $J_c$ represents the second sub-loss value, $u_k$ represents the feature vector of the target sample feature of the k-th image in the face training data, $c_k$ represents a center of the k-th image in the face training data, and m represents the number of images in each bath of the face training data;

wherein, the loss value fusion formula is as follows:

$$J = w_1 J_s + w_2 J_c$$

wherein, $J$ represents the loss value, and $w_1$ and $w_2$ represent weights.

8. An apparatus for extracting facial features, comprising:

an image acquisition unit, configured for acquiring a target image;
an image processing unit, configured for performing image processing on the target image to obtain a target processed image; and
an image input unit, configured for inputting the target processed image into a facial feature extraction model to output target facial features; wherein the facial feature extraction model is a model trained according to the method for training a facial feature extraction model according to any of claims 1-5.

9. A computer device, comprising: a memory and a processor; wherein

the memory is configured for storing a computer program; and
the processor is configured for executing the computer program and implementing the following steps when executing the computer program:

inputting face training data into a plurality of original student networks for model training, respectively, to obtain candidate student networks corresponding to the original student networks;
inputting face verification data into the candidate student networks, respectively, to output verified facial feature data corresponding to the respective candidate student networks;
inputting the verified facial feature data into a preset teacher network to output candidate facial feature data corresponding to the respective verified facial feature data;
screening the candidate facial feature data based on preset feature screening rules to obtain target sample features;
determining a first sub-loss value and a second sub-loss value of each of the candidate student networks corresponding to the target sample features according to the target sample features, based on a first loss function and a second loss function;
determining a loss value of each of the candidate student networks corresponding to the target sample features according to the first sub-loss value and the second sub-loss value, based on a loss value fusion formula; and
determining the candidate student network corresponding to the target sample features as a facial feature extraction model, if the loss value thereof is smaller than a preset loss threshold;
wherein the first loss function is as follows:

$$J_s = -\sum_{k=1}^{m} \log \frac{e^{u_k}}{\sum_{j=1}^{n} u_j}$$

wherein, $J_s$ represents the first sub-loss value, $u_k$ represents a feature vector of the target sample feature of a k-th image in the face training data, $u_j$ represents a tag vector of the k-th image in the face training data, and m represents the number of images in each bath of the face training data;

wherein, the second loss function is as follows:

$$J_c = \frac{1}{2} \sum_{k=1}^{m} \| u_k - c_k \|_2^2$$

wherein, $J_c$ represents the second sub-loss value, $u_k$ represents the feature vector of the target sample feature of the k-th image in the face training data, $c_k$ represents a center of the k-th image in the face training data, and m represents the number of images in each bath of the face training data;

wherein, the loss value fusion formula is as follows:

$$J = w_1 J_s + w_2 J_c$$

wherein, $J$ represents the loss value, and $w_1$ and $w_2$ represent weights.

10. The computer device according to claim 9, wherein before the step of inputting face verification data into the candidate student networks, respectively, to output verified facial feature data corresponding to the respective candidate student networks, the method further comprises:

performing uncertainty analysis on a face sample image set to obtain analysis results, wherein the face sample image set comprises a plurality of unannotated images;
screening the face sample image set according to the analysis results to obtain an image set to be annotated; and annotating the image set to be annotated to obtain the face verification data.

11. The computer device according to claim 10, wherein the step of performing uncertainty analysis on a face sample image set to obtain analysis results, wherein the face sample image set comprises a plurality of unannotated images, comprises:

performing least confidence analysis on images of the face sample image set, to obtain a first uncertainty value corresponding to each of the images;
performing margin sampling analysis on images of the face sample image set, to obtain a second uncertainty value corresponding to each of the images; and
performing information entropy analysis on images of the face sample image set, to obtain a third uncertainty value corresponding to each of the images, whereby obtaining the analysis results.

12. The computer device according to claim 10, wherein

the analysis results comprises: the first uncertainty value, the second uncertainty value, and the third uncertainty value; and
the step of screening the face sample image set according to the analysis results to obtain an image set to be annotated comprises:

screening images of the face sample image set according to the first uncertainty value to obtain a first screened image set;
screening the images of the face sample image set according to the second uncertainty value to obtain a second screened image set;
screening the images of the face sample image set according to the third uncertainty value to obtain a third screened image set; and
constructing the image set to be annotated according to the first screened image set, the second screened image set, and the third screened image set.

**13.** The computer device according to claim 9, wherein the step of screening the candidate facial feature data based on preset feature screening rules to obtain target sample features comprises:

calculating an accuracy rate of each of the candidate facial feature data according to each of the candidate facial feature data and check facial feature data of a preset check face image; and
determining the candidate facial features corresponding to a highest accuracy rate as the target sample features.

**14.** A computer device, comprising: a memory and a processor; wherein

the memory is configured for storing a computer program; and
the processor is configured for executing the computer program and implementing the following steps when executing the computer program:

acquiring a target image;
performing image processing on the target image to obtain a target processed image; and
inputting the target processed image into a facial feature extraction model to output target facial features; wherein the facial feature extraction model is a model trained according to the method for training a facial feature extraction model according to any of claims 1-5.

**15.** A computer-readable storage medium, configured for storing a computer program which is to be executed by a processor, wherein the processor implements the following steps when executing the computer program:

inputting face training data into a plurality of original student networks for model training, respectively, to obtain candidate student networks corresponding to the original student networks;
inputting face verification data into the candidate student networks, respectively, to output verified facial feature data corresponding to the respective candidate student networks;
inputting the verified facial feature data into a preset teacher network to output candidate facial feature data corresponding to the respective verified facial feature data;
screening the candidate facial feature data based on preset feature screening rules to obtain target sample features;
determining a first sub-loss value and a second sub-loss value of each of the candidate student networks corresponding to the target sample features according to the target sample features, based on a first loss function and a second loss function;
determining a loss value of each of the candidate student networks corresponding to the target sample features according to the first sub-loss value and the second sub-loss value, based on a loss value fusion formula; and
determining the candidate student network corresponding to the target sample features as a facial feature extraction model, if the loss value thereof is smaller than a preset loss threshold;
wherein the first loss function is as follows:

$$J_s = -\sum_{k=1}^{m} \log \frac{e^{u_k}}{\sum_{j=1}^{n} u_j}$$

wherein, $J_s$ represents the first sub-loss value, $u_k$ represents a feature vector of the target sample feature of a k-th image in the face training data, $u_j$ represents a tag vector of the k-th image in the face training data, and m represents the number of images in each bath of the face training data;
wherein, the second loss function is as follows:

$$J_c = \frac{1}{2} \sum_{k=1}^{m} \| u_k - c_k \|_2^2$$

wherein, $J_c$ represents the second sub-loss value, $u_k$ represents the feature vector of the target sample feature of the k-th image in the face training data, $c_k$ represents a center of the k-th image in the face training data, and m represents the number of images in each bath of the face training data;

wherein, the loss value fusion formula is as follows:

$$J = w_1 J_s + w_2 J_c$$

wherein, $J$ represents the loss value, and $w_1$ and $w_2$ represent weights.

16. The computer-readable storage medium according to claim 15, wherein before the step of inputting face verification data into the candidate student networks, respectively, to output verified facial feature data corresponding to the respective candidate student networks, the method further comprises:

performing uncertainty analysis on a face sample image set to obtain analysis results, wherein the face sample image set comprises a plurality of unannotated images;
screening the face sample image set according to the analysis results to obtain an image set to be annotated; and
annotating the image set to be annotated to obtain the face verification data.

17. The computer-readable storage medium according to claim 16, wherein the step of performing uncertainty analysis on a face sample image set to obtain analysis results, wherein the face sample image set comprises a plurality of unannotated images, comprises:

performing least confidence analysis on images of the face sample image set, to obtain a first uncertainty value corresponding to each of the images;
performing margin sampling analysis on images of the face sample image set, to obtain a second uncertainty value corresponding to each of the images; and
performing information entropy analysis on images of the face sample image set, to obtain a third uncertainty value corresponding to each of the images, whereby obtaining the analysis results.

18. The computer-readable storage medium according to claim 16, wherein
the analysis results comprises: the first uncertainty value, the second uncertainty value, and the third uncertainty value; and
the step of screening the face sample image set according to the analysis results to obtain an image set to be annotated comprises:

screening images of the face sample image set according to the first uncertainty value to obtain a first screened image set;
screening the images of the face sample image set according to the second uncertainty value to obtain a second screened image set;
screening the images of the face sample image set according to the third uncertainty value to obtain a third screened image set; and
constructing the image set to be annotated according to the first screened image set, the second screened image set, and the third screened image set.

19. The computer-readable storage medium according to claim 15, wherein the step of screening the candidate facial feature data based on preset feature screening rules to obtain target sample features comprises:

calculating an accuracy rate of each of the candidate facial feature data according to each of the candidate facial feature data and check facial feature data of a preset check face image; and
determining the candidate facial features corresponding to a highest accuracy rate as the target sample features.

20. A computer-readable storage medium, comprising:

acquiring a target image;
performing image processing on the target image to obtain a target processed image; and
inputting the target processed image into a facial feature extraction model to output target facial features;

wherein the facial feature extraction model is a model trained according to the method for training a facial feature extraction model according to any of claims 1-5.

S110

selecting unannotated images from multiple original face images according to preset selection rules to obtain a face sample image set

S120

performing uncertainty analysis on a face sample image set to obtain analysis results

S130

screening the face sample image set according to the analysis results to obtain an image set to be annotated

S140

annotating the image set to be annotated, whereby obtaining an annotated face image set

FIG. 1

S121

performing least confidence analysis on images of the face sample image set, to obtain a first uncertainty value corresponding to each of the images

S122

performing margin sampling analysis on images of the face sample image set, to obtain a second uncertainty value corresponding to each of the images

S123

performing information entropy analysis on images of the face sample image set, to obtain a third uncertainty value corresponding to each of the images, whereby obtaining the analysis results

FIG. 2

S131

screening images of the face sample image set according to the first uncertainty value to obtain a first screened image set

S132

screening the images of the face sample image set according to the second uncertainty value to obtain a second screened image set

S133

screening the images of the face sample image set according to the third uncertainty value to obtain a third screened image set

S134

constructing the image set to be annotated according to the first screened image set, the second screened image set, and the third screened image set

FIG. 3

S1311

determining whether the uncertainty value corresponding to each image is greater than a preset uncertainty threshold

S1312

setting a face sample image as the image to be annotated if the corresponding uncertainty value is greater than the preset uncertainty threshold

S1313

setting all the images to be annotated as an image set to be annotated

FIG. 4

~ S210

inputting face training data into a plurality of original student networks for model training, respectively, to obtain candidate student networks corresponding to the original student networks

~ S220

inputting face verification data into the candidate student networks, respectively, to output verified facial feature data corresponding to the respective candidate student networks

~ S230

inputting the verified facial feature data into a preset teacher network to output candidate facial feature data corresponding to the respective verified facial feature data

~ S240

screening the candidate facial feature data based on preset feature screening rules to obtain target sample features, and determining the candidate student network corresponding to the target sample features as a facial feature extraction model

FIG. 5

~ S241

calculating an accuracy rate of each of the candidate facial feature data according to each of the candidate facial feature data and check facial feature data of a preset check face image

~ S242

determining the candidate facial features corresponding to a highest accuracy rate as the target sample features

FIG. 6

/S243

calculating a loss value of the candidate student network corresponding to the target sample features according to the target sample features

/S244

determining the candidate student network corresponding to the target sample features as a facial feature extraction model, if the loss value thereof is smaller than a preset loss threshold

/S245

adjusting parameters of the candidate student network according to the loss value, if the loss value is not smaller than a preset loss threshold value

FIG. 7

/S2431

determining a first sub-loss value and a second sub-loss value of each of the candidate student networks corresponding to the target sample features according to the target sample features, based on a first loss function and a second loss function

/S2432

determining a loss value of each of the candidate student networks corresponding to the target sample features according to the first sub-loss value and the second sub-loss value, based on a loss value fusion formula

FIG. 8

S310

acquiring a target image

S320

performing image processing on the target image to obtain a target processed image

S330

inputting the target processed image into a facial feature extraction model to output target facial features

FIG. 9

FIG. 10

_400_

apparatus for training facial feature extraction model

_410_
model training unit

_420_
data output unit

_430_
data input unit

_440_
model determination unit

_450_
result acquisition unit

_460_
image screen unit

_470_
image annotation unit

FIG. 11

_440_

model determination unit

_441_
accuracy rate calculation sub-unit

_442_
feature determination sub-unit

_443_

_4431_
sub-loss value determination sub-unit

_4432_
loss value fusion sub-unit

loss value determination sub-unit

_444_
model determination sub-unit

FIG. 12

500

apparatus for extracting
facial features

510

image
acquisition unit

520

image
processing unit

530

image input
unit

FIG. 13

computer device

processor

system bus

operating system

internal
memory

computer program

non-volatile storage
medium

network
interface

FIG. 14

| INTERNATIONAL SEARCH REPORT | International application No. |
|---|---|
| | **PCT/CN2019/122165** |

| A. | CLASSIFICATION OF SUBJECT MATTER |
|---|---|

G06K 9/00(2006.01)i

According to International Patent Classification (IPC) or to both national classification and IPC

| B. | FIELDS SEARCHED |
|---|---|

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, CNKI, WPI, EPODOC: 脸部, 特征, 模型, 提取, 老师, 学生, 候选, 验证, 损失, 函数, 向量, face, feature, model, extract, teacher, student, candidate, verify, lost, function, vector

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 110472494 A (ONE CONNECT SMART TECHNOLOGY CO., LTD. (SHENZHEN)) 19 November 2019 (2019-11-19)<br>claims 1-10 | 1-20 |
| A | CN 109711544 A (BEIJING SENSETIME SCIENCE TECHNOLOGY DEVELOPMENT CO., LTD.) 03 May 2019 (2019-05-03)<br>abstract, description, paragraphs 55-90 | 1-20 |
| A | CN 109447169 A (BEIJING MEGVII TECHNOLOGY LTD.) 08 March 2019 (2019-03-08)<br>entire document | 1-20 |
| A | CN 109241988 A (BEIJING SENSETIME TECHNOLOGY DEVELOPMENT CO., LTD.) 18 January 2019 (2019-01-18)<br>entire document | 1-20 |
| A | CN 108334934 A (BEIJING DEEPHI INTELLIGENT TECHNOLOGY CO., LTD.) 27 July 2018 (2018-07-27)<br>entire document | 1-20 |
| A | US 2015206064 A1 (LEVMAN, Jacob) 23 July 2015 (2015-07-23)<br>entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 March 2020** | **20 March 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/122165**

| Patent document cited in search report | | | Publication date (day/month/year) | Patent family member(s) | | | Publication date (day/month/year) |
|---|---|---|---|---|---|---|---|
| CN | 110472494 | A | 19 November 2019 | None | | | |
| CN | 109711544 | A | 03 May 2019 | None | | | |
| CN | 109447169 | A | 08 March 2019 | None | | | |
| CN | 109241988 | A | 18 January 2019 | None | | | |
| CN | 108334934 | A | 27 July 2018 | WO | 2018223822 | A1 | 13 December 2018 |
| US | 2015206064 | A1 | 23 July 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910606508